# FASCICULE DE BREVET EUROPEEN

(11) **EP 3 157 808 B1**
(45) Date de publication et mention de la délivrance du brevet: **10.10.2018**
(21) Numéro de dépôt: 15738725.9
(22) Date de dépôt: 17.06.2015
(51) Int. Cl.: B63H 9/06, B64C 3/48

(54) **AILE POUR LA PROPULSION D'UN ENGIN**
FLÜGEL FÜR DEN ANTRIEB EINES FAHRZEUGES
WING FOR THE PROPULSION OF A VEHICLE

(30) Priorité: 18.06.2014 FR 1455580
(43) Date de publication de la demande: 26.04.2017
(73) Titulaire: Morel, Julien, 75010 Paris (FR)
(72) Inventeur: Morel, Julien, 75010 Paris (FR)
(74) Mandataire: Kessler, Marc
(86) Numéro de dépôt international: PCT/FR2015/051610
(87) Numéro de publication internationale: WO 2015/193617

(56) Documents cités:
- FR-A1- 2 676 032
- US-A- 3 332 383

## Description

### DOMAINE TECHNIQUE DE L'INVENTION

La présente invention porte sur une aile pour la propulsion d'un engin. L'invention trouve une application particulièrement avantageuse, mais non exclusive, pour la propulsion d'un bateau.

### ARRIERE PLAN TECHNOLOGIQUE

La reproduction d'une aile ayant une structure de profil à fort potentiel aérodynamique a fait l'objet d'un grand nombre de recherches. Une aile pour la propulsion d'un engin devant pouvoir être utilisée quelle que soit la direction du vent apparent, le principal enjeu consiste à reproduire avec précision des profils à fort potentiel aérodynamique de façon symétrique.

Ainsi, il a été développé des systèmes utilisant des enveloppes extérieures flexibles, avec ou sans allongement. L'enveloppe extérieure est ainsi reproduite à l'aide d'un ou de plusieurs éléments flexibles, la plupart du temps sous forme de lattes, ces lattes étant déformées par des mécanismes internes ou externes.

Certains dispositifs connus, décrits notamment dans les documents US6863008 et WO8600591, utilisent un élément avant symétrique dont l'extrémité correspond au bord d'attaque du profil, ce qui entraine de fait deux limitations. D'une part, le profil obtenu possède alors un axe de symétrie sur le bord d'attaque et ne peut reproduire avec précision les profils optimisés connus à forte courbure de type S1223 ou FX74CL5 MOD qui ne possèdent pas cette symétrie. D'autre part, ces systèmes ne peuvent alors reproduire, avec une enveloppe externe continue et qui ne peut que très modérément s'allonger, que des profils pour lesquels les différences de longueur entre l'intrados et l'extrados sont négligeables, donc à faible courbure, et ne correspondant pas à des profils optimisés connus de type S1223 ou FX74CL5 MOD.

D'autres dispositifs connus, décrits notamment dans les documents US4895091 ou US4386574, parviennent à augmenter la courbure de l'ensemble en désolidarisant l'arrière de l'enveloppe, créant ainsi une discontinuité de l'enveloppe extérieure sur la partie arrière du profil, ce qui aura pour conséquence de fragiliser l'ensemble du dispositif, de limiter la précision du contrôle de la forme arrière du profil, et de créer des perturbations aérodynamiques sur la partie arrière du profil en comparaison à des profils optimisés connus de type S1223 ou FX74CL5 MOD.

Les dispositifs décrits notamment dans les documents US3332383 ou US6045096 sont aptes à faire glisser une partie de l'enveloppe externe sur une partie de la structure interne, la forme de ladite structure interne visant à reproduire la forme d'un profil aérodynamique, entrainant ainsi des frictions qui fragilisent l'ensemble et limitent la précision des contrôles.

Par ailleurs, les dispositifs décrits notamment dans les documents US4624203 ou US4341176 utilisent une structure interne mécanique dans laquelle une partie des pièces coulissent les unes contre les autres afin de reproduire la forme d'un profil aérodynamique, entrainant des frictions qui fragilisent l'ensemble et limitent la précision des contrôles.

Les dispositifs décrits notamment dans les documents US5181678 ou US7384016 sont basés sur l'utilisation d'une structure interne flexible afin de reproduire la forme d'un profil aérodynamique, entrainant une fragilité globale de la structure interne et une limitation de la précision de l'ensemble.

On connait également les dispositifs de voiles doubles à roues, comme décrit dans le document GB2085387, permettant d'augmenter la longueur d'un côté de l'enveloppe afin de créer une différence de longueur entre l'extrados et l'intrados tout en gardant solidaire la queue de l'enveloppe. Le système décrit dans le document DE4207539 utilise un ensemble composé d'une pièce avant symétrique et de deux lattes pour former un ensemble fermé avec une différence de longueur entre l'extrados et l'intrados.

Cependant, l'enveloppe extérieure n'est pas constituée d'un seul élément flexible, ce qui peut fragiliser le dispositif. En outre, la pièce avant symétrique induit une symétrie de la courbure qui ne permet pas de reproduire avec précision la variation de courbure de profils optimisés comme le S1223 ou le FX74CL5MOD. La structure de contrôle n'est pas définie sur l'ensemble du profil et il n'y a aucun contrôle supplémentaire de la courbure locale sur les lattes. Il est également à noter que l'intrados ne présente pas de concavité et que le dispositif utilise une liaison coulissante entre la structure reliée au mat et les lattes, ce qui crée des frictions et fragilise l'ensemble.

En outre, le document FR 2 676 032 A1, qui est considéré comme l'état de la technique le plus proche, décrit le préambule de la revendication 1.

Ainsi, aucune des structures de profil connues n'est en mesure de reproduire avec précision et robustesse des profils optimisés connus de type S1223 ou FX74CL5 MOD en contrôlant de façon optimale un seul élément extérieur continu, flexible, et qui ne peut que très modérément s'allonger. Ceci explique en partie pourquoi, en l'état actuel, les voiliers de compétition, comme les AC72 ou AC45, utilisent de façon préférentielle un ensemble de profils symétriques rigides articulés entre eux, ces différents profils faisant directement office de peau extérieure à l'ensemble. Dans ce cas, il est possible de reproduire des courbures importantes sur l'ensemble de l'aile. Toutefois, la forme extérieure présente alors des discontinuités de courbure, ce qui augmente la trainée de forme de l'ensemble.

### OBJET DE L'INVENTION

L'invention vise à remédier efficacement aux inconvénients des systèmes existants en proposant une aile pour la propulsion d'un engin, caractérisée en ce qu'elle comporte une enveloppe externe, et au moins une structure de profil entourée par ladite enveloppe externe, ladite structure de profil ayant une structure interne articulée, et un ensemble de moyens de contrôle d'une déformation de ladite enveloppe externe, chaque moyen de contrôle étant monté rotatif par rapport à ladite structure interne, chaque moyen de contrôle étant en outre monté rotatif par rapport à ladite enveloppe d'externe via au moins une liaison rotative et comportant au moins une surface courbe configurée pour orienter une courbure de ladite enveloppe externe localement entre ledit moyen de contrôle et un moyen de contrôle adjacent. Selon une réalisation, ladite structure de profil est adaptée à prendre une position, dite position neutre, dans laquelle ladite structure de profil présente un plan longitudinal de symétrie.

Selon une réalisation, ladite structure interne est articulée de manière à pouvoir assurer un changement de courbure de ladite structure de profil pour passer d'une première position à une deuxième position extrême, et inversement.

Selon une réalisation, au moins un moyen de contrôle
est monté rotatif par rapport à un premier côté de ladite enveloppe externe via une première liaison rotative, et comporte une première surface courbe configurée pour orienter la courbure de ladite enveloppe externe localement suivant ledit premier côté de ladite enveloppe externe lorsque ladite structure de profil se trouve dans ladite première position extrême, et
est monté rotatif par rapport à un deuxième côté de ladite enveloppe externe opposé audit premier côté via une deuxième liaison rotative, et comporte une deuxième surface courbe configurée pour orienter la courbure de ladite enveloppe externe localement suivant ledit deuxième côté lorsque ladite structure de profil se trouve dans ladite première position extrême.

Selon une réalisation, ledit moyen de contrôle comporte
une troisième surface courbe sensiblement symétrique à ladite première surface courbe, ladite troisième surface courbe étant configurée pour orienter la courbure de ladite enveloppe externe localement suivant ledit deuxième côté de ladite enveloppe externe lorsque ladite structure de profil se trouve dans ladite deuxième position extrême, et
une quatrième surface courbe sensiblement symétrique à ladite deuxième surface courbe, ladite quatrième surface courbe étant configurée pour orienter la courbure de ladite enveloppe externe localement suivant ledit premier côté de ladite enveloppe externe lorsque ladite structure de profil se trouve dans ladite deuxième position extrême.

Selon une réalisation, deux parties de ladite enveloppe externe s'étendant entre une extrémité de la structure de profil et chacune des deux liaisons rotatives d'un moyen de contrôle donné sont de longueur sensiblement identiques.

Selon une réalisation, un moyen de contrôle situé à une extrémité de ladite structure de profil, appelé nez, est monté rotatif par rapport à ladite enveloppe externe via une liaison rotative unique et comporte une seule surface courbe pour orienter la courbure de ladite enveloppe externe depuis ladite liaison rotative jusqu'à un bord d'attaque de ladite structure de profil.

Selon une réalisation, ladite structure interne articulée est constituée de plusieurs éléments articulés entre eux par des liaisons rotatives.

Selon une réalisation, ladite structure interne comporte un élément, dit queue, auquel est fixée ladite enveloppe externe, ladite queue étant destinée à orienter la courbure du côté d'une extrémité arrière de ladite enveloppe externe.

Selon une réalisation, ladite enveloppe externe est réalisée dans un matériau flexible et quasiment non-extensible.

Selon une réalisation, ladite aile comporte une pluralité de structures de profil portées par au moins un élément structurel de type un mât ou longeron.

Selon une réalisation, ladite enveloppe externe est réalisée d'un seul tenant entre lesdites structures de profil.

Selon une réalisation, ladite enveloppe externe comporte au moins une portion réalisée dans un matériau souple et des portions réalisées dans un matériau rigide situées autour de chaque structure de profil, ladite portion de matériau souple s'étendant entre au moins deux portions de matériau rigide, en sorte que la portion de matériau souple peut être pliée.

Selon une réalisation, lesdits moyens de contrôle définissent des poignées d'une spline caractérisant une courbure d'enveloppe recherchée.

Selon une réalisation, lesdits moyens de contrôle sont définis de manière à permettre à ladite enveloppe externe de reproduire avec la plus grande précision possible la courbure d'une enveloppe théorique de type FX74-CL5-MOD.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
Les figures 1a et 1b sont des vue en coupe transversale d'une structure de profil selon la présente invention lorsque cette dernière se trouve dans une première et une deuxième position extrême;
La figure 2 montre une vue en coupe de la structure de profil selon la présente invention sans la structure interne lorsqu'elle se trouve dans une position intermédiaire;
Les figures 3a et 3b sont des vues détaillées de la partie avant de la structure de profil lorsque cette dernière se trouve respectivement dans la première et la deuxième position extrême;
La figure 4 est une vue détaillée de la partie arrière de la structure de profil selon la présente invention;
La figure 5a et 5b représentent respectivement la courbure de la structure de profil théorique de type FX-74-CL5 MOD et la courbure de la structure de profil selon la présente invention;
La figure 5c représente l'erreur exprimée en pourcentage de la longueur de la corde du profil théorique entre la spline de la structure de profil selon la présente invention et l'intrados du profil théorique FX-74-CL5 MOD;
La figure 5d représente l'erreur exprimée en pourcentage de la longueur de la corde du profil théorique entre la spline de la structure de profil selon la présente invention et l'extrados du profil théorique FX-74-CL5 MOD
La figure 6 est une vue en perspective d'une aile comportant un ensemble de structures de profil selon la présente invention.

Les éléments identiques, similaires, ou analogues conservent la même référence d'une figure à l'autre.

### DESCRIPTION D'EXEMPLES DE REALISATION DE L'INVENTION

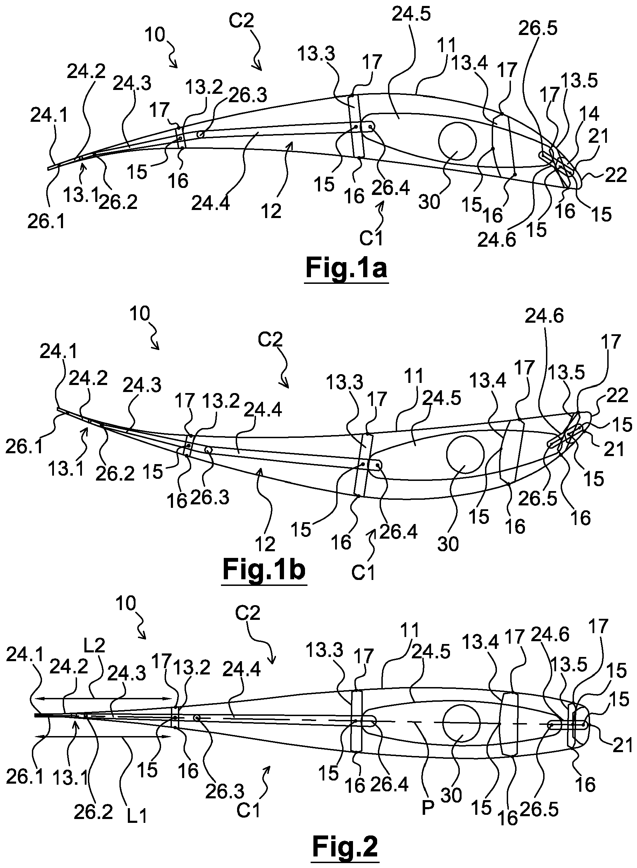

Les figures 1a et 1b montrent une vue en coupe transversale d'une structure de profil 10 entourée par une enveloppe externe 11. Cette enveloppe externe 11 est de préférence flexible et quasiment non-extensible.

Cette structure de profil 10 comprend une structure interne 12 articulée, ainsi qu'un ensemble de moyens de contrôle 13.1-13.5, 14 de la déformation de l'enveloppe 11. Chaque moyen de contrôle 13.1-13.5, 14 est monté rotatif par rapport à ladite structure interne 12 suivant une liaison rotative 15.

La structure interne 12 est articulée de manière à pouvoir assurer un changement de courbure de la structure de profil 10 entre une première position et une deuxième position extrêmes dans chacune desquelles la structure de profil 10 présente une courbure optimale. Comme cela est visible sur les figures 1a et 1b, les formes que la structure de profil présentent dans ces deux positions extrêmes sont sensiblement symétriques l'une par rapport à l'autre. La structure de profil 10 peut également se trouver dans une position intermédiaire représentée à la figure 2, dans laquelle la structure 10 présente un plan longitudinal P de symétrie. Outre cette symétrie générale, cette figure met également en évidence la symétrie autour du plan P de chacune des pièces composant la structure de profil 10 et en particulier chaque moyen de contrôle, dont le nez.

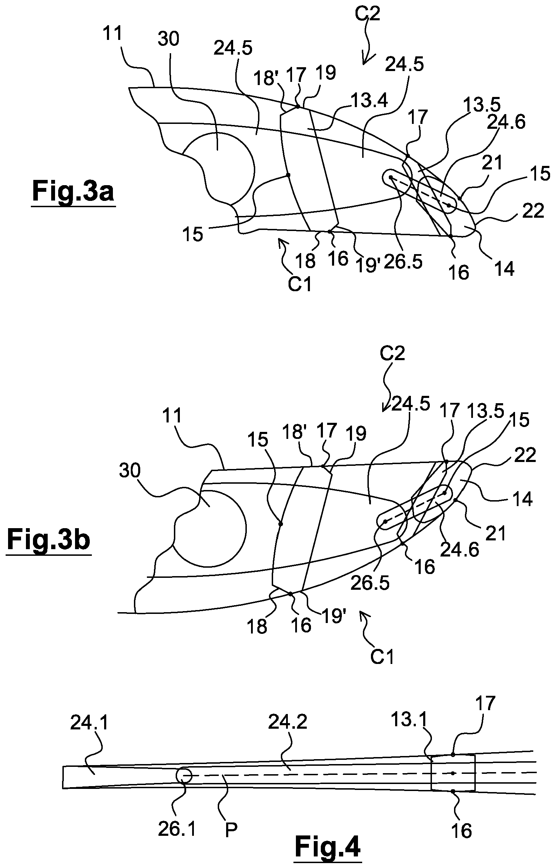

Chaque moyen de contrôle 13.1-13.5 présente une orientation sensiblement transversale par rapport à la structure de profil 10. Comme on peut le voir plus clairement sur les figures 3a et 3b, chaque moyen de contrôle 13.1-13.5 est monté rotatif par rapport à un premier côté C1 de l'enveloppe 11 via une première liaison rotative 16. Chaque moyen de contrôle 13.1-13.5 comporte une première surface courbe 18 configurée pour orienter la courbure de l'enveloppe 11 localement autour du moyen de contrôle 13.1-13.5 suivant le premier côté C1 lorsque la structure de profil 10 se trouve dans la première position extrême. Sur la figure 1a, le premier côté C1 de l'enveloppe 11 correspond à celui par lequel le vent arrive et est appelé "intrados".

Chaque moyen de contrôle 13.1-13.5 est également monté rotatif par rapport à un deuxième côté C2 de l'enveloppe 11 opposé au premier côté C1 via une deuxième liaison rotative 17. Chaque moyen de contrôle 13.1-13.5 comporte également une deuxième surface courbe 19 configurée pour orienter la courbure de l'enveloppe 11 localement suivant le deuxième côté C2 lorsque la structure de profil 10 se trouve dans la première position extrême. Sur les figures 1a et 3a, le deuxième côté C2 de l'enveloppe 11 opposé au premier côté est appelé "extrados".

Les deux parties de l'enveloppe 11 s'étendant entre une extrémité de la structure de profil 10 constituée par la queue 24.1 (opposée au nez) et chacune des deux liaisons rotatives 16, 17 d'un moyen de contrôle 13.1-13.5 donné sont de longueur sensiblement identiques. Par exemple, comme cela ressort clairement de la figure 2, pour le moyen de contrôle 13.2 la partie de l'enveloppe 11 qui s'étend sur la longueur L1 présente la même longueur que la partie qui s'étend sur la longueur L2. Il en est de même pour les moyens de contrôles 13.1, 13.3-13.5.

Par ailleurs, les liaisons rotatives 15, 16, 17 sont en l'occurrence des liaisons pivot autour d'un axe sensiblement vertical perpendiculaire à la feuille sur laquelle sont représentées les figures.

En outre, comme cela est bien visible sur les figures 3a et 3b, les moyens de contrôle 13.1-13.5 comportent chacun une troisième surface courbe 18' sensiblement symétrique à la première surface courbe 18 par rapport au plan P sensiblement médian transversal du moyen de contrôle 13.1-13.5. La troisième surface courbe 18' est configurée pour orienter localement la courbure de l'enveloppe 11 localement suivant le deuxième côté C2 de l'enveloppe 11 lorsque la structure de profil 10 se trouve dans la deuxième position extrême. Le deuxième côté C2 correspond alors à l'intrados tandis que le premier côté C1 correspond à l'extrados.

Les moyens de contrôle 13.1-13.5 comportent également une quatrième surface courbe 19' sensiblement symétrique à la deuxième surface 19 par rapport au plan sensiblement médian P et transversal du moyen de contrôle 13.1-13.5. La quatrième surface courbe 19' est configurée pour orienter la courbure de l'enveloppe 11 localement suivant le premier côté C1 de l'enveloppe 11 lorsque la structure de profil 10 se trouve dans la deuxième position extrême.

Du côté C1, la première 18 et la quatrième 19' surfaces sont positionnées de part et d'autre de la liaison rotative 16. Du côté C2, la deuxième 19 et la troisième 18' surfaces sont positionnées de part et d'autre de la liaison rotative 17.

Il est à noter que les surfaces courbes 18, 18'; 19, 19' sont spécifiques à chacun des moyens de contrôles 13.1-13.5. Ainsi, deux moyens de contrôle 13.1-13.5 successifs présentent des surfaces courbes 18, 18', 19, 19' ayant des courbures différentes, dans la mesure où ces surfaces courbes correspondent à des portions de spline ayant des rayons de courbure différents et que les moyens de contrôle 13.1, 13.5 présentent des angles d'inclinaison différents, comme cela est expliqué ci-après.

En outre, la structure de profil 10 comporte un moyen de contrôle 14 situé à une de ses extrémités, appelé nez, monté rotatif par rapport à l'enveloppe 11 via une liaison rotative unique 21. La liaison 21 est également une liaison de type pivot. Le nez 14 comporte une seule surface courbe 22 pour orienter la courbure de l'enveloppe 11 depuis ladite liaison rotative 21 jusqu'à un bord d'attaque de la structure de profil 10.

Compte tenu des liaisons pivot 16, 17, 21 intervenant entre l'enveloppe 11 et chaque moyen de contrôle 13.1-13.5, 14, l'enveloppe 11 et chaque moyen de contrôle sont solidaires en translation l'un par rapport à l'autre, c'est-à-dire que si l'enveloppe 11 se déplace en translation, elle entraîne en translation le moyen de contrôle, et inversement lorsque le moyen de contrôle se déplace en translation, il entraîne en translation l'enveloppe 11. Autrement dit, dans l'invention, l'enveloppe 11 ne peut pas coulisser par rapport aux moyens de contrôle 13.1-13.5, 14.

Les moyens de contrôle 13.1-13.5, 14 définissent ainsi, dans les deux positions extrêmes, des poignées d'une spline caractérisant une courbure de l'enveloppe 11 recherchée. Chaque poignée est définie par les coordonnées dans le plan des points d'attache de ces moyens de contrôle avec l'enveloppe externe constitué par les liaisons rotatives 16, 17, 21, et localement la courbure de l'enveloppe autour de ces points d'attache.

En effet, au niveau de chaque poignée, la ou les surface courbes 18, 18', 19, 19', 22 d'un moyen de contrôle donné 13.1-13.5, 14 oriente la courbure de l'enveloppe 11 entre ledit moyen de contrôle donné 13.1-13.5, 14 et le moyen de contrôle suivant. Dans les deux positions extrêmes de la structures de profils, les moyens de contrôle 13.1-13.5, 14 permettent en l'occurrence de reproduire avec la plus grande précision possible l'intrados et l'extrados d'une courbure d'enveloppe théorique de type FX74-CL5-MOD. D'autres types de modèles théoriques pourront en variante être reproduits.

La structure interne 12 articulée qui présente une orientation longitudinale par rapport à la structure de profil 10 est constituée de plusieurs éléments 24.1-24.6 articulés entre eux par des liaisons rotatives 26.1-26.5. Les liaisons rotatives 26.1-26.5 sont en l'occurrence des liaisons pivot autour d'un axe sensiblement vertical perpendiculaire à la feuille sur laquelle sont représentées les figures.

Les éléments 24.1-24.6 relient les différents moyens de contrôle 13.1-13.5, 14. En effet, chaque moyen de contrôle 13.1-13.5 est relié à un des éléments 24.1-24.6 via une liaison rotative 15. Dans le mode de réalisation représenté, les liaisons rotatives 26.1-26.5 sont distinctes des liaisons rotatives 15. Toutefois, en variante, il sera possible que certaines ou toutes les liaisons 26.1-26.5 soient confondues avec des liaisons 15.

Comme cela est bien visible sur la figure 4, la structure interne 12 comporte à l'extrémité arrière du profil un élément 24.1, dit queue de profil, auquel est fixée l'enveloppe 11. La queue 24.1 oriente la courbure de l'extrémité arrière de l'enveloppe 11. A l'exception de la queue 24.1, il n'est pas nécessaire que les autres éléments de la structure interne 12 participent à l'orientation de la courbure de l'enveloppe externe 14. En effet, outre la fonction de déplacement, la structure interne 12 vise à garantir une rigidité suffisante de l'ensemble. Toutefois, on pourra prévoir dans certaines réalisations que des éléments de la structure interne 12 autres que la queue 24.1 puissent servir localement de surface d'appui pour l'enveloppe externe 11.

On décrit ci-après le fonctionnement de la structure de profil 10. Dans la première position extrême montrée sur les figures 1a et 3a, la première surface courbe 18 et la deuxième surface courbe 19 des différents moyens de contrôle 13.1-13.5 coopèrent respectivement avec l'intrados et l'extrados de l'enveloppe 11. La troisième surface courbe 18' et la quatrième surface courbe 19' ne sont alors pas en contact avec l'enveloppe 11. Le nez 14 coopère par ailleurs avec la partie avant pour obtenir la courbure optimale recherchée. Le nez 14 coopère depuis le point 21 jusqu'au bord d'attaque du profil correspondant à l'extrémité de la structure 10.

Ainsi, du côté de l'intrados (ici le côté C1), la queue 24.1 oriente la courbure de l'enveloppe 11 jusqu'au moyen de contrôle 13.1. La première surface courbe 18 du moyen de contrôle 13.1 oriente la courbure de l'enveloppe 11 jusqu'au moyen de contrôle 13.2. La première surface courbe 18 du moyen de contrôle 13.2 oriente la courbure de l'enveloppe 11 jusqu'au moyen de contrôle 13.3. La première surface courbe 18 du moyen de contrôle 13.3 oriente la courbure de l'enveloppe 11 jusqu'au moyen de contrôle 13.4. La première surface courbe 18 du moyen de contrôle 13.4 oriente la courbure de l'enveloppe 11 jusqu'au moyen de contrôle 13.5. La première surface courbe 18 du moyen de contrôle 13.5 oriente la courbure de l'enveloppe 11 jusqu'au nez 14, lequel oriente la courbure de l'enveloppe 11 sur le bord d'attaque jusqu'au point 21 situé sur le côté C2 (l'extrados).

Par ailleurs, du côté de l'extrados (ici le côté C2), la queue 24.1 oriente la courbure de l'enveloppe 11 jusqu'au moyen de contrôle 13.1. La deuxième surface courbe 19 du moyen de contrôle 13.1 oriente la courbure de l'enveloppe 11 jusqu'au moyen de contrôle 13.2. La deuxième surface courbe 19 du moyen de contrôle 13.2 oriente la courbure de l'enveloppe 11 jusqu'au moyen de contrôle 13.3. La deuxième surface courbe 19 du moyen de contrôle 13.3 oriente la courbure de l'enveloppe 11 jusqu'au moyen de contrôle 13.4. La deuxième surface courbe 19 du moyen de contrôle 13.4 oriente la courbure de l'enveloppe 11 jusqu'au moyen de contrôle 13.5. La deuxième surface courbe 19 du moyen de contrôle 13.5 oriente la courbure de l'enveloppe 11 jusqu'au nez 14. Le nez 14 oriente également la courbure de l'enveloppe 11 du point 21 jusqu'au bord d'attaque.

Suite à une rotation des éléments 24.1-24.6 de la structure interne 12 les uns par rapport aux autres, la courbure de la structure 12 diminue jusqu'à ce que la structure de profil 10 passe par une position de transition représentée à la figure 2, dans laquelle ladite structure de profil 10 présente une forme symétrique. Cette représentation met en évidence que les longueurs des parties de l'enveloppe 11 s'étendant depuis la queue 24.1 vers des liaisons opposées d'un même moyen de contrôle 13.1-13.5 présentent des longueurs sensiblement identiques.

Le déplacement ultérieur en rotation des éléments 24.1-24.6 de la structure interne 12 a ensuite pour effet d'augmenter la courbure de la structure interne 12 jusqu'à la seconde position extrême visible sur les figures 1b et 3b, en sorte que l'intrados et l'extrados s'intervertissent. La troisième surface courbe 18' et la quatrième surface courbe 19' des moyens de contrôle 13 coopèrent alors respectivement avec l'intrados et l'extrados de la nouvelle forme prise par la structure de profil 10. La première 18 et la deuxième 19 surfaces courbes ne sont alors plus en contact avec l'enveloppe 11. Le nez 14 occupe alors une position symétrique à celle qu'il occupait dans la première position extrême.

Ainsi, du côté de l'intrados (ici le côté C2), la queue 24.1 oriente la courbure de l'enveloppe 11 jusqu'au moyen de contrôle 13.1. La troisième surface courbe 18' du moyen de contrôle 13.1 oriente la courbure de l'enveloppe 11 jusqu'au moyen de contrôle 13.2. La troisième surface courbe 18' du moyen de contrôle 13.2 oriente la courbure de l'enveloppe 11 jusqu'au moyen de contrôle 13.3. La troisième surface courbe 18' du moyen de contrôle 13.3 oriente la courbure de l'enveloppe 11 jusqu'au moyen de contrôle 13.4. La troisième surface courbe 18' du moyen de contrôle 13.4 oriente la courbure de l'enveloppe 11 jusqu'au moyen de contrôle 13.5. La troisième surface courbe 18' du moyen de contrôle 13.5 oriente la courbure de l'enveloppe 11 jusqu'au nez 14, lequel oriente la courbure de l'enveloppe 11, lequel oriente la courbure de l'enveloppe 11 sur le bord d'attaque jusqu'au point 21 situé du côté de l'extrados (ici le côté C1).

Par ailleurs, du côté de l'extrados (ici le côté C1), la queue 24.1 oriente la courbure de l'enveloppe 11 jusqu'au moyen de contrôle 13.1. La quatrième surface courbe 19' du moyen de contrôle 13.1 oriente la courbure de l'enveloppe 11 jusqu'au moyen de contrôle 13.2. La quatrième surface courbe 19' du moyen de contrôle 13.2 oriente la courbure de l'enveloppe 11 jusqu'au moyen de contrôle 13.3. La quatrième surface courbe 19' du moyen de contrôle 13.3 oriente la courbure de l'enveloppe 11 jusqu'au moyen de contrôle 13.4. La quatrième surface courbe 19' du moyen de contrôle 13.4 oriente la courbure de l'enveloppe 11 jusqu'au moyen de contrôle 13.5. La quatrième surface courbe 19' du moyen de contrôle 13.5 oriente la courbure de l'enveloppe 11 jusqu'au nez 14 lequel oriente la courbure sur le bord d'attaque de la structure de profil 10.

Du fait de la symétrie de la structure de profil 10 qui est observable dans la position intermédiaire, on obtiendra la courbure recherchée optimale dans les deux positions extrêmes. Dans ces deux positions, la courbure optimale est obtenue par une succession d'adaptations locales de la courbure de l'enveloppe 11. On note à cet égard que la structure profil 10 est prévue pour être utilisée sélectivement dans une des deux positions extrêmes, et non dans des positions intermédiaires situées entre ces deux positions.

De préférence, on utilise des butées destinées à limiter les déplacements des moyens de contrôle 13, 14 et de la structure interne 12 entre les deux positions extrêmes dans lesquelles l'aile présente une forme correspondant au profil recherché.

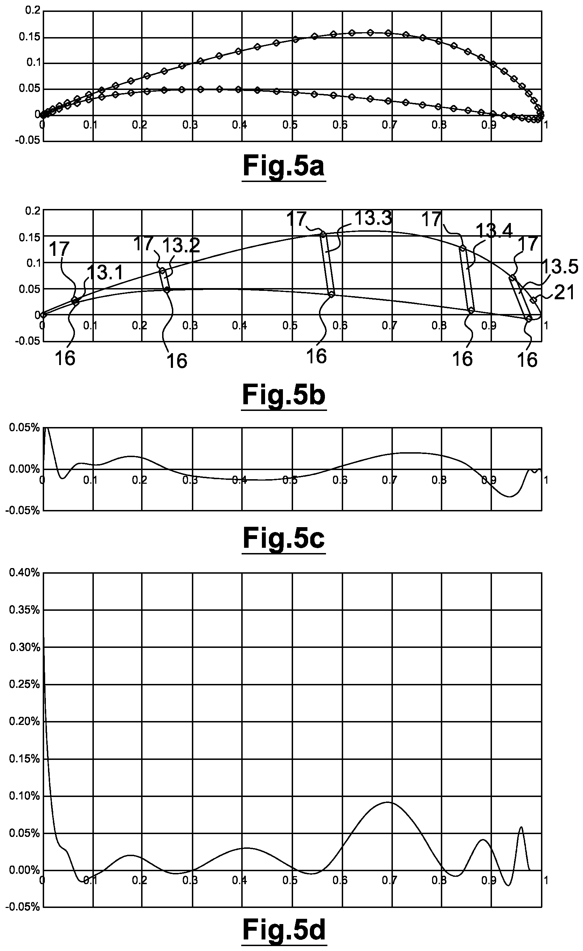

La figure 5a représente le profil théorique FX-74-CL5 MOD avec les points tels que définis par le Dr Franz Xaver Wortmann.

La figure 5b représente les couples de liaisons rotatives 16-17 ainsi que la liaison rotative 21 dans une position extrême ainsi que la spline obtenue à partir de ces points. Il est à noter que les couples de points 16-17 sont équidistants de l'extrémité arrière du profil ou du point 21.

La figure 5c représente l'erreur exprimée en pourcentage de la longueur de la corde du profil théorique entre la spline obtenue à partir des liaisons 16, 17, 21 et l'intrados du profil théorique FX-74-CL5 MOD. La figure 5d représente l'erreur exprimée en pourcentage de la longueur de la corde du profil théorique entre la spline obtenue à partir des liaisons 16, 17, 21 et l'extrados du profil théorique FX-74-CL5 MOD. Ces figures mettent en évidence que l'erreur est très faible et inférieure quasiment en tout point, sauf du côté de l'extrémité arrière à 0.10%.

L'exemple de réalisation a été donné pour une structure de profil 10 comportant une structure articulée 12 formée de six éléments 24.1-24.6 ainsi que cinq moyens de contrôle intermédiaires 13.1-13.5, plus le nez 14. Toutefois, il est clair que le nombre de moyens de contrôles intermédiaires et d'éléments formant la structure interne 12 pourra varier en fonction notamment des dimensions de la structure de profil 10 et de la précision recherchée dans la reproduction d'une courbure théorique souhaitée.

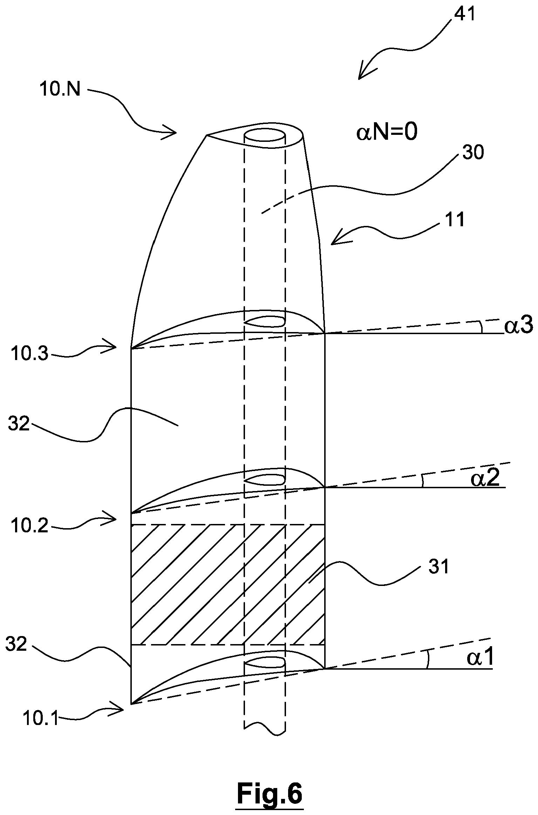

La structure de profil 10 précédemment décrite pourra être intégrée à une aile 41 illustrée à la figure 6. Cette aile 41 comporte en l'occurrence une pluralité de structures de profil 10.1-10.N portées par au moins un élément structurel 30 de type mât pour un bateau ou longeron pour un avion.

De préférence, l'angle d'attaque α de ces différentes structures de profil 10.1-10.N correspondant à l'angle entre la corde du profil par rapport à la direction du vent a tendance à diminuer lorsqu'on se déplace du bas vers le haut du mât 30. La courbure des différentes structures de profil 10.1-10.N pourra également varier de manière correspondante. Cela permet de twister le profil, de limiter la trainée induite, et d'abaisser le centre de poussée du bateau.

Selon un premier mode de réalisation, l'enveloppe 11 est réalisée d'un seul tenant entre les structures de profil 10.1-10.N. Dans ce cas, l'enveloppe 11 pourra être réalisée par exemple dans un matériau composite continu rigidifié par des fibres.

Selon une deuxième mode de réalisation, l'enveloppe 11 comporte au moins une portion 31 réalisée dans un matériau souple et des portions 32 réalisées dans un matériau rigide situées autour de chaque structure de profil 10.1-10.N. La portion 31 de matériau souple s'étendant entre au moins deux portions 32 de matériau rigide, en sorte que la portion 31 de matériau souple peut être pliée en déplaçant, en translation le long du mât 30, les structures de profils entre lesquelles s'étend la portion réalisée dans un matériau souple, comme par exemple les structures 10.1 et 10.2 sur la figure 4. En variante, les structures 10.1-10.N pourraient être fixes, comme pour les anciens gréements à voiles carrées.

Comme cela ressort de la description, l'enveloppe 11 est fixe par rapport à la structure de profil 10. En tout état de cause, l'enveloppe 11 est ainsi fixée sur la structure de profil 10 en au moins quatre zones à savoir le nez 14, la queue 24.1 et au niveau des deux liaisons rotatives 16, 17 d'au moins un moyen de contrôle.

En variante, les liaisons rotatives 15, 16, 17, 21, 26.1-26.5 pourrait présenter chacune plus d'un axe de rotation.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Aile (41) pour la propulsion d'un engin, comportant
- une enveloppe externe (11), et
- au moins une structure de profil (10) entourée par ladite enveloppe externe (11), ladite structure de profil (10) ayant
- une structure interne (12) articulée, ladite structure interne (12), qui présente une orientation longitudinale par rapport à ladite structure de profil (10), étant constituée de plusieurs éléments (24.1-24.6) articulés entre eux par des liaisons rotatives (26.1-26.5), et
- un ensemble de moyens de contrôle (13.1-13.5, 14) d'une déformation de ladite enveloppe externe (11), chaque moyen de contrôle (13.1-13.5, 14) étant monté rotatif par rapport à ladite structure interne (12), ladite enveloppe externe (11) et chaque moyen de contrôle (13.1-13.5, 14) étant solidaires en translation l'un par rapport à l'autre, et **caractérisé en ce que** chaque moyen de contrôle (13.1-13.5, 14) étant en outre monté rotatif par rapport à ladite enveloppe d'externe (11) via au moins une liaison rotative (16, 17, 21),
- chaque moyen de contrôle (13.1-13.5) comportant au moins une surface courbe (18, 19, 18', 19', 22) configurée pour orienter une courbure de ladite enveloppe externe (11) localement entre ledit moyen de contrôle (13, 14) et un moyen de contrôle (13, 14) adjacent.

2. Aile selon la revendication 1, **caractérisé en ce que** ladite structure de profil (10) est adaptée à prendre une position, dite position neutre, dans laquelle ladite structure de profil présente un plan longitudinal de symétrie.

3. Aile selon la revendication 1 ou 2, **caractérisée en ce que** ladite structure interne (12) est articulée de manière à pouvoir assurer un changement de courbure de ladite structure de profil (10) pour passer d'une première position à une deuxième position extrême, et inversement.

4. Aile selon la revendication 3, **caractérisée en ce qu'**au moins un moyen de contrôle (13.1-13.5) est monté rotatif par rapport à un premier côté (C1) de ladite enveloppe externe (11) via une première liaison rotative (16), et comporte une première surface courbe (18) configurée pour orienter la courbure de ladite enveloppe externe (11) localement suivant ledit premier côté (C1) de ladite enveloppe externe (11) lorsque ladite structure de profil (10) se trouve dans ladite première position extrême, et
est monté rotatif par rapport à un deuxième côté (C2) de ladite enveloppe externe (11) opposé audit premier côté (C1) via une deuxième liaison rotative (17), et comporte une deuxième surface courbe (19) configurée pour orienter la courbure de ladite enveloppe externe (11) localement suivant ledit deuxième côté (C2) lorsque ladite structure de profil (10) se trouve dans ladite première position extrême.

5. Aile selon la revendication 4, **caractérisée en ce que** ledit moyen de contrôle (13.1-13.5) comporte
une troisième surface courbe (18') sensiblement symétrique à ladite première surface courbe (18), ladite troisième surface courbe (18') étant configurée pour orienter la courbure de ladite enveloppe externe (11) localement suivant ledit deuxième côté (C2) de ladite enveloppe externe (11) lorsque ladite structure de profil (10) se trouve dans ladite deuxième position extrême, et
une quatrième surface courbe (19') sensiblement symétrique à ladite deuxième surface courbe (19), ladite quatrième surface courbe (19') étant configurée pour orienter la courbure de ladite enveloppe externe (11) localement suivant ledit premier côté (C1) de ladite enveloppe externe (11) lorsque ladite structure de profil (10) se trouve dans ladite deuxième position extrême.

6. Aile selon la revendication 4 ou 5, **caractérisé en ce que** deux parties de ladite enveloppe externe (11) s'étendant entre une extrémité de la structure de profil et chacune des deux liaisons rotatives d'un moyen de contrôle donné sont de longueur (L1, L2) sensiblement identiques.

7. Aile selon l'une quelconque des revendications 1 à 6, **caractérisé en ce qu'**un moyen de contrôle (14) situé à une extrémité de ladite structure de profil (10), appelé nez, est monté rotatif par rapport à ladite enveloppe externe (11) via une liaison rotative unique (21) et comporte une seule surface courbe (22) pour orienter la courbure de ladite enveloppe externe (11) depuis ladite liaison rotative (21) jusqu'à un bord d'attaque de ladite structure de profil.

8. Aile selon l'une quelconque des revendications 1 à 7, **caractérisé en ce que** ladite structure interne (12) articulée est constituée de plusieurs éléments (24.1-24.6) articulés entre eux par des liaisons rotatives (26.1-26.5).

9. Aile selon l'une quelconque des revendications 1 à 8, **caractérisée en ce que** ladite structure interne (12) comporte un élément (24.1), dit queue, auquel est fixée ladite enveloppe externe (11), ladite queue (24.1) étant destinée à orienter la courbure du côté d'une extrémité arrière de ladite enveloppe externe (11).

10. Aile selon l'une quelconque des revendications 1 à 9, **caractérisée en ce que** ladite enveloppe externe (11) est réalisée dans un matériau flexible et quasiment non-extensible.

11. Aile selon l'une quelconque des revendications 1 à 10, **caractérisée en ce qu'**elle comporte une pluralité de structures de profil (10.1-10.N) portées par au moins un élément structurel (30) de type un mât ou longeron.

12. Aile selon la revendication 11, **caractérisée en ce que** ladite enveloppe externe (11) est réalisée d'un seul tenant entre lesdites structures de profil (10.1-10.N).

13. Aile selon la revendication 11, **caractérisée en ce que** ladite enveloppe externe (11) comporte au moins une portion (31) réalisée dans un matériau souple et des portions (32) réalisées dans un matériau rigide situées autour de chaque structure de profil (10.1-10.N), ladite portion (31) de matériau souple s'étendant entre au moins deux portions (32) de matériau rigide, en sorte que la portion (31) de matériau souple peut être pliée.

14. Aile selon l'une quelconque des revendications 1 à 13, **caractérisé en ce que** lesdits moyens de contrôle (13.1-13.5, 14) définissent des poignées d'une spline caractérisant une courbure d'enveloppe recherchée.

15. Aile selon l'une quelconque des revendications 1 à 14, **caractérisée en ce que** lesdits moyens de contrôle (13.1-13.5, 14) sont définis de manière à permettre à ladite enveloppe externe (11) de reproduire avec la plus grande précision possible la courbure d'une enveloppe théorique de type FX74-CL5-MOD.

## Patentansprüche

1. Flügel (41) zum Vortrieb einer Maschine, umfassend :
- eine Außenhülle (11) und
- mindestens eine Profilstruktur (10), die von der Außenhülle (11) umgeben ist, wobei die Profilstruktur (10) umfasst:
- eine gelenkige Innenstruktur (12), wobei die Innenstruktur (12), die relativ zur Profilstruktur (10) längsorientiert ist, aus mehreren über drehbare Verbindungen (26.1-26.5) gelenkig miteinander verbundenen Elementen (24-1 - 24.6) besteht, und
- eine Gruppe von Mitteln (13.1 - 13.5, 14) zur Steuerung einer Verformung der Außenhülle (11), wobei jedes Steuerungsmmittel (13.1 - 13.5, 14) relativ zur Innenstruktur (12) drehbar montiert ist, wobei die Außenhülle (11) und jedes Steuerungsmittel (13.1 - 13.5, 14) miteinander längsverschieblich zusammengehalten werden, und **dadurch gekennzeichnet, dass** jedes Steuerungsmittel (13.1 - 13.5, 14) ferner relativ zur Außenhülle (11) über mindestens eine drehbare Verbindung (16, 17, 21) drehbar montiert ist,
wobei jedes Steuerungsmittel (13.1 - 13.5) mindestens eine gekrümmte Oberfläche (18, 19, 18', 19', 22) aufweist, die derart konfiguriert ist, dass sie eine Krümmung der Außenhülle (11) lokal zwischen dem Steuerungsmittel (13, 14) und einem benachbarten Steuerungsmittel (13, 14) orientiert.

2. Flügel nach Anspruch 1, **dadurch gekennzeichnet, dass** die Profilstruktur (10) dazu geeignet ist, eine Stellung ("Neutralstellung") einzunehmen, in der die Profilstruktur eine Längssymmetrieebene aufweist.

3. Flügel nach Anspruch 1 oder 2, **dadurch gekennzeichnet, dass** die Innenstruktur (12) derart artikuliert ist, dass sie eine Änderung der Krümmung der Profilstruktur (10) gewährleisten kann, um von einer ersten in eine zweite Endstellung übergehen zu können, und umgekehrt.

4. Flügel nach Anspruch 3, **dadurch gekennzeichnet, dass** mindestens ein Steuerungsmittel (13.1 - 13.5) relativ zu einer ersten Seite (C1) der Außenhülle (11) über eine erste drehbare Verbindung (16) drehbar montiert ist und eine erste gekrümmte Oberfläche (18) aufweist, die derart konfiguriert ist, dass sie die Krümmung der Außenhülle (11) lokal an der ersten Seite (C1) der Außenhülle (11) orientiert, wenn sich die Profilstruktur (10) in der ersten Endstellung befindet, und
relativ zu einer zweiten Seite (C2) der Außenhülle (11), die der ersten Seite (C1) gegenüberliegt, über eine zweite drehbare Verbindung (17) drehbar montiert ist und eine zweite gekrümmte Oberfläche (19) aufweist, die derart konfiguriert ist, dass sie die Krümmung der Außenhülle (11) lokal an der zweiten Seite (C2) orientiert, wenn sich die Profilstruktur (10) in der ersten Endstellung befindet.

5. Flügel nach Anspruch 4, **dadurch gekennzeichnet, dass** das Steuerungsmittel (13.1 - 13.5) umfasst:
eine dritte gekrümmte Oberfläche (18'), die im Wesentlichen symmetrisch zur ersten gekrümmten Oberfläche (18) ist, wobei die dritte gekrümmte Oberfläche (18') derart konfiguriert ist, dass sie die Krümmung der Außenhülle (11) lokal an der zweiten Seite (C2) der Außenhülle (11) orientiert, wenn sich die Profilstruktur (10) in der zweiten Endstellung befindet, und
eine vierte gekrümmte Oberfläche (19'), die im Wesentlichen symmetrisch zur zweiten gekrümmten Oberfläche (19) ist, wobei die vierte gekrümmte Oberfläche (19') derart konfiguriert ist, dass sie die Krümmung der Außenhülle (11) lokal an der ersten Seite (C1) der Außenhülle (11) orientiert, wenn sich die Profilstruktur (10) in der zweiten Endstellung befindet.

6. Flügel nach Anspruch 4 oder 5, **dadurch gekennzeichnet, dass** zwei Teile der Außenhülle (11), die sich zwischen einem Ende der Profilstruktur und jeder der zwei drehbaren Verbindungen eines jeweiligen Steuerungsmittels erstrecken, im Wesentlichen identische Längen (L1, L2) aufweisen.

7. Flügel nach einem der Ansprüche 1 - 6, **dadurch gekennzeichnet, dass** ein Steuerungsmittel (14), das an einem Ende der Profilstruktur (10) ("Nase") angeordnet ist, relativ zur Außenhülle (11) über eine einzige drehbare Verbindung (21) montiert ist und eine einzige gekrümmte Oberfläche (22) aufweist, um die Krümmung der Außenhülle (11) von der drehbaren Verbindung (21) her zu einer vorderkante der Profilstruktur zu orientieren.

8. Flügel nach einem der Ansprüche 1 - 7, **dadurch gekennzeichnet, dass** die gelenkige Innenstruktur (12) aus mehreren Elementen (24.1 - 24.6) besteht, die über drehbare Verbindungen (26.1 - 26.5) miteinander gelenkig verbunden sind.

9. Flügel nach einem der Ansprüche 1 - 8, **dadurch gekennzeichnet, dass** die Innenstruktur (12) ein Element (24.1) ("Schaft") umfasst, an dem die Außenhülle (11) befestigt ist, wobei der Schaft (24.1) die Krümmung der Seite eines hinteren Endes der Außenhülle (11) orientieren soll.

10. Flügel nach einem der Ansprüche 1 - 9, **dadurch gekennzeichnet, dass** die Außenhülle (11) aus einem flexiblen, prakltisch nicht denbaren Material besteht.

11. Flügel nach einem der Ansprüche 1 - 10,
**dadurch gekennzeichnet, dass** er eine Mehrzahl Profilstrukturen (10.1 - 10.N) umfasst, die von mindestens einem strukturellen Element (30) von der Art einer Stange oder eines Trägers getragen werden.

12. Flügel nach Anspruch 11, **dadurch gekennzeichnet, dass** jede Außenhülle (11) zwischen den Profilstrukturen (10.1 - 10.N) einstückig ausgebildet ist.

13. Flügel nach Anspruch 11, **dadurch gekennzeichnet, dass** die Außenhülle (11) mindestens einen Abschnitt (31), der aus einem biegsamen Material besteht, sowie Abschnitte (32), die aus einem steifen Material bestehen und um jede Profilstruktur (10.1 - 10.N) herum angeordnet sind, aufweist, wobei der Abschnitt (31) aus biegsamem Material sich zwischen mindestens zwei Abschnitten (32) aus steifem Material erstreckt, sodass der Abschnitt (31) aus biegsamem Material gefaltet werden kann.

14. Flügel nach einem der Ansprüche 1 - 13, **dadurch gekennzeichnet, dass** die Steuerungsmittel (13.1 - 13.5, 14) Handgriffe eines Splines definieren, die eine gewünschte Krümmung der Hülle charakterisieren.

15. Flügel nach einem der Ansprüche 1 - 14, **dadurch gekennzeichnet, dass** die Steuerungsmittel (13.1 - 13.5, 14) derart definiert sind, dass die Außenhülle (11) die Krümmung einer theoretischen Hülle vom Typ FX74-CL5-MOD mit der bestmöglichen Genauigkeit reproduzieren kann.

## Claims

1. A wing (41) for the propulsion of a vehicle, comprising
- an outer enclosure (11), and
- at least one profile structure (10) surrounded by said outer enclosure (11), said profile structure (10) having
- an articulated inner structure (12), said inner structure (12), which has a longitudinal orientation relative to said profile structure (10), being made up of several elements (24.1-24.6) articulated to one another by rotating links (26.1-26.5), and
- a set of means (13.1-13.5, 14) for controlling a deformation of said outer enclosure (11), each control means (13.1-13.5, 14) being mounted rotating relative to said inner structure (12), said outer enclosure (11) and each control means (13.1-13.5, 14) being secured in translation relative to one another, and **characterized in that** each control means (13.1-13.5, 14) further being mounted rotating relative to said outer enclosure (11) via at least one rotary link (16, 17, 21),
- each control means (13.1-13.5) comprising at least one curved surface (18, 19, 18', 19', 22) configured to orient a curvature of said outer enclosure (11) locally between said control means (13, 14) and an adjacent control means (13, 14).

2. The wing according to claim 1, **characterized in that** said profile structure (10) is suitable for assuming a position, called neutral position, in which said profile structure has a longitudinal plane of symmetry.

3. The wing according to claim 1 or 2, **characterized in that** said inner structure (12) is articulated so as to be able to provide a change of curvature of said profile structure (10) to go from a first position to a second extreme position, and vice versa.

4. The wing according to claim 3, **characterized in that** at least one control means (13.1-13.5) is mounted rotating relative to a first side (C1) of said outer enclosure (11) via a first rotary link (16), and comprises a first curved surface (18) configured to orient the curvature of said outer enclosure (11) locally along said first side (C1) of said outer enclosure (11) when said profile structure (10) is in said first extreme position, and
is mounted rotating relative to a second side (C2) of said outer enclosure (11) opposite said first side (C1) via a second rotary link (17), and comprises a second curved surface (19) configured to orient the curvature of said outer enclosure (11) locally along said second side (C2) when said profile structure (10) is located in said first extreme position.

5. The wing according to claim 4, **characterized in that** said control means (13.1-13.5) comprises
a third curved surface (18') substantially symmetrical to said first curved surface (18), said third curved surface (18') being configured to orient the curvature of said outer enclosure (11) locally along said second side (C2) of said outer enclosure (11) when said profile structure (10) is in said second extreme position, and
a fourth curved surface (19') substantially symmetrical to said second curved surface (19), said fourth curved surface (19') being configured to orient the curvature of said outer enclosure (11) locally along said first side (C1) of said outer enclosure (11) when said profile structure (10) is in said second extreme position.

6. The wing according to claim 4 or 5, **characterized in that** two parts of said outer enclosure (11) extending between one end of the profile structure and each of the two rotary links of a given control means have substantially identical lengths (L1, L2).

7. The wing according to any one of claims 1 to 6, **characterized in that** a control means (14) located at one end of said profile structure (10), called nose, is mounted rotating relative to said outer enclosure (11) via a single rotary link (21) and comprises a single curved surface (22) in order to orient the curvature of said outer enclosure (11) from said rotary link (21) up to a leading edge of said profile structure.

8. The wing according to any one of claims 1 to 7, **characterized in that** said articulated inner structure (12) is made up of several elements (24.1-24.6) articulated to one another by rotary links (26.1-26.5).

9. The wing according to any one of claims 1 to 8, **characterized in that** said inner structure (12) comprises an element (24.1), called tail, to which said outer enclosure (11) is fastened, said tail (24.1) being intended to orient the curvature from the side of a rear end of said outer enclosure (11).

10. The wing according to any one of claims 1 to 9, **characterized in that** said outer enclosure (11) is made from a flexible and quasi-non-extensible material.

11. The wing according to any one of claims 1 to 10, **characterized in that** it comprises a plurality of profile structures (10.1-10.N) supported by at least one structural element (30) such as a mast or spar.

12. The wing according to claim 11, **characterized in that** said outer enclosure (11) is made in a single piece between said profile structures (10.1-10.N).

13. The wing according to claim 11, **characterized in that** said outer enclosure (11) comprises at least one portion (31) made from a flexible material and portions (32) made from a rigid material that are located around each profile structure (10.1-10.N), said portion (31) of flexible material extending between at least two portions (32) of rigid material, such that the portion (31) of flexible material may be bent.

14. The wing according to any one of claims 1 to 13, **characterized in that** said control means (13.1-13.5, 14) define handles of a spline characterizing a desired enclosure curvature.

15. The wing according to any one of claims 1 to 14, **characterized in that** said control means (13.1-13.5, 14) are defined so as to allow said outer enclosure (11) to reproduce, with the greatest possible precision, the curvature of a theoretical enclosure of type FX74-CL5-MOD.
